Europäisches Patentamt

(19) European Patent Office

Office européen des brevets

(11) Publication number: **0 079 110**
**A1**

(12) # EUROPEAN PATENT APPLICATION

(21) Application number: **82201408.0**

(22) Date of filing: **09.11.82**

(51) Int. Cl.³: **G 11 B 23/02**

(30) Priority: **11.11.81 NL 8105096**

(43) Date of publication of application:
**18.05.83 Bulletin 83/20**

(84) Designated Contracting States:
**DE FR GB IT NL**

(71) Applicant: **N.V. Philips' Gloeilampenfabrieken
Groenewoudseweg 1
NL-5621 BA Eindhoven(NL)**

(72) Inventor: **Steenberg, Johannes
c/o INT. OCTROOIBUREAU B.V. Prof. Holstlaan 6
NL-5656 AA Eindhoven(NL)**

(74) Representative: **Van Weele, Paul Johannes Frits et al,
INTERNATIONAAL OCTROOIBUREAU B.V. Prof.
Holstlaan 6
NL-5656 AA Eindhoven(NL)**

(54) Information-disc cassette.

(57) The cassette (6) contains a disc (7) within an enclosure (10A, B) which has two major walls (11A, B) and a peripheral wall (12A, B, C). The disc is rotatable by means of a drive apparatus (1). On each side of said disc information can be recorded and/or reproduced through openings (13A, B) in the major walls. For closing these openings there is provided a single closing member (14) which simultaneously closes both openings and which is bodily removable in a radial direction with respect to the disc and comprises a portion (14A, B) of each of the major walls of the information disc cassette and a portion (12C) of the peripheral wall between said two portions of the major walls.

FIG. 1

Croydon Printing Company Ltd

"Information-disc cassette".

The invention relates to an information-disc cassette which comprises a rotatable disc for carrying information and an enclosure comprising major walls on opposite sides of the disc and a surrounding peripheral wall, each of the major walls being formed with an opening for the passage of means for recording and/or reproducing the information on the disc, which opening can be closed by means of a closure member.

Such an information-disc cassette, specifically a magnetic-disc cassette, is known from U.S. Patent Specification 3,529,301. In this known and in other similar information-disc cassette the disc remains permanently within the enclosure. For the passage of means for recording and/or reproducing the information during use openings are formed in each major wall, which openings permit the passage of said means, such as magnetic heads or an optical pick-up.

Both in the case of optical and magnetic information-discs it is important to provide optimum protection of the disc surface against dust and manual contact. Therefore, a closure element is provided for each of the openings in the major walls of the known information-disc cassette, which element takes the form of a closure member which is pivotally mounted in the information-disc cassette. The two closure members can each be opened, when the information-disc cassette is put into operation, by means of portions which project from the enclosure.

The known information-disc cassette has two disadvantages. The closure members each co-operate with a plurality of other parts which actuate the closure members, so that for each of the openings in the major walls which can be closed there is required a closure mechanism comprising a plurality of components. A second disadvantage is that for accommodating each closure mechanism, in particular the closure members, a certain mounting height in the
information-disc cassette is required. This results in an
increased height of the information-disc cassette. It is an
object of the invention to provide an information-disc
cassette of the type mentioned in the opening paragraph
which does not require a closure mechanism for the actuation of the closure members and which consequently has a
smaller mounting height, and the cassette is characterized
in that a single closure member is provided for simultaneously closing the two said openings in the major walls,
and the closure member is removable from the enclosure in
a radial direction with respect to the disc and comprises
a removable portion of each of the major walls and a removable portion of the peripheral wall, the latter portion
being disposed between said portions of the major walls.

Before use the entire single closure member
of the information-disc cassette in accordance with the invention is removed, for example manually. Immediatelt after
use of the information-disc cassette the closure member is
refitted. Thus, the protection of the information-disc surface is almost as complete as in said known information-
disc cassette.

In addition to the afore-mentioned disadvantages the known information-disc cassette has a further
disadvantage. In order to permit the rotary drive of the
information-disc inside the enclosure, the major walls are
formed with central openings for the passage of drive members of a drive mechanism. Dust and contaminants can reach
the information-disc through these central openings. An
embodiment of the invention which also provides a solution
to this problem is characterized in that: the major walls
portions of the closure member extend in a radial direction
beyons the centre of the disc; the enclosure has a fully
closed external shape when the closure member is in place;
and after the closing member has been removed, said openings in the major walls provide access to the centre of the
disc for the passage of drive members of a drive apparatus for rotating the disc. An information-disc cassette in accordance with this embodiment of the invention has a fully closed external shape when the information-disc is not in use, thus providing optimum protection of the disc during storage and handling.

It is important that while the information-disc cassette is not in use the disc occupies a fixed position in the cassette to prevent damage to the disc as a result of relative movement between the disc and the enclosure. In said knon information-disc cassette there are provided clamping members which are coupled to the closure mechanism, which members clamp the information disc in position inside the enclosure. Within the scope of the present invention this problem can be solved in a simple manner with an embodiment which is characterized in that the closure member is provided on the inner sides of its major wall portions with elastically compressible supporting means such that when the closure member  has been fitted the disc is clamped between the elastically compressible supporting means.

For a correct co-operation between the closure member and the other parts of the enclosure an embodiment is of interest which is characterized in that the closure member and the adjacent parts of the two major walls are provided with guide elements which co-operate with each other and which are capable of only rectilinear sliding movements relative to each other.

The invention will now be described in more detail with reference to the drawings, in which:

Figure 1 is a perspective view of an information-disc drive apparatus and an associated information-disc cassette according to the invention,

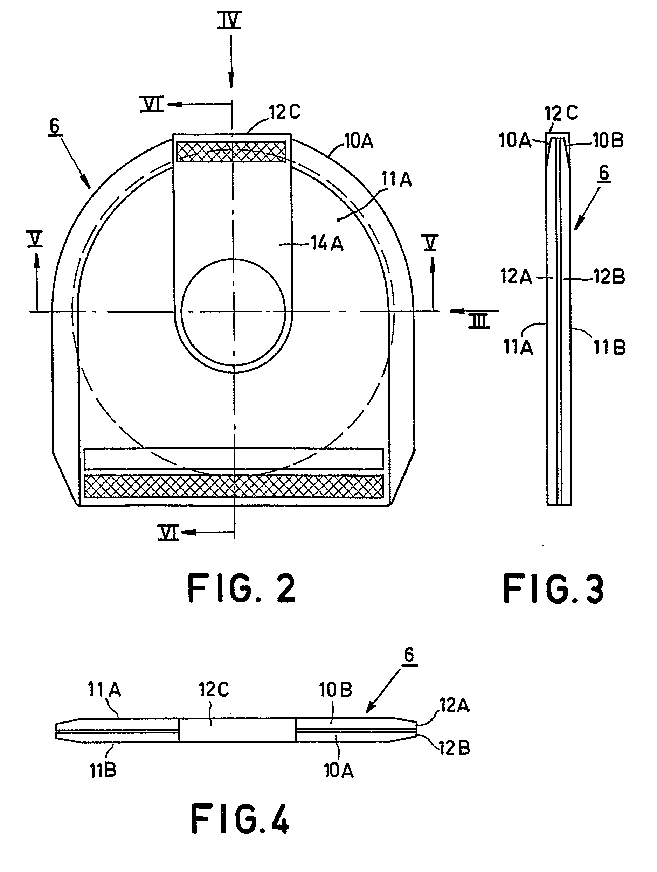

Figure 2 is a plan view, on a reduced scale, of an information-disc cassette according to the invention,

Figure 3 is a view looking in the direction of the arrow III in Figure 2,

Figure 4 is a view looking in the direction of the arrow IV in Figure 2,

Figure 5 is an enlarged sectional view taken on the line V-V in Figure 2,

Figure 6 is an enlarged sectional view taken on the line VI-VI in Figure 2, and

Figure 7 is a view similar to Figure 6 but with the closure member removed.

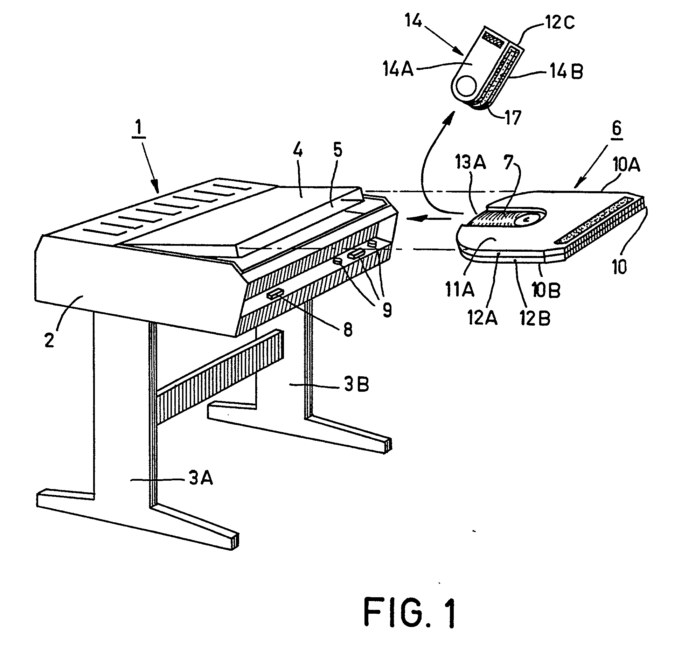

The drive apparatus 1 in Figure 1 comprises a housing 2 on legs 3a and 3b. At the top cover 4 is pivotally mounted in the housing. In the drawing the cover 4 is shown in an open position, exposing a front opening 5 for receiving an information-disc cassette 6. The housing 2 comprises means for rotating an optical disc 7 in the information-disc cassette, which means are disposed underneat the cover 4 and are not shown in the drawing. The housing also accommodates the required electrical and electronic circuits and at its fron a number of controls 8 and 9 are located. After insertion of the information-disc cassette 6 through the front opening in the cover 4, the cover is manually closed, and a latching mechanism in the housing 2 locks the cover in the closed position. Unlatching is effected by actuating the push-button 8. The drive apparatus 1 does not form part of the present invention and will not be described in more detail.

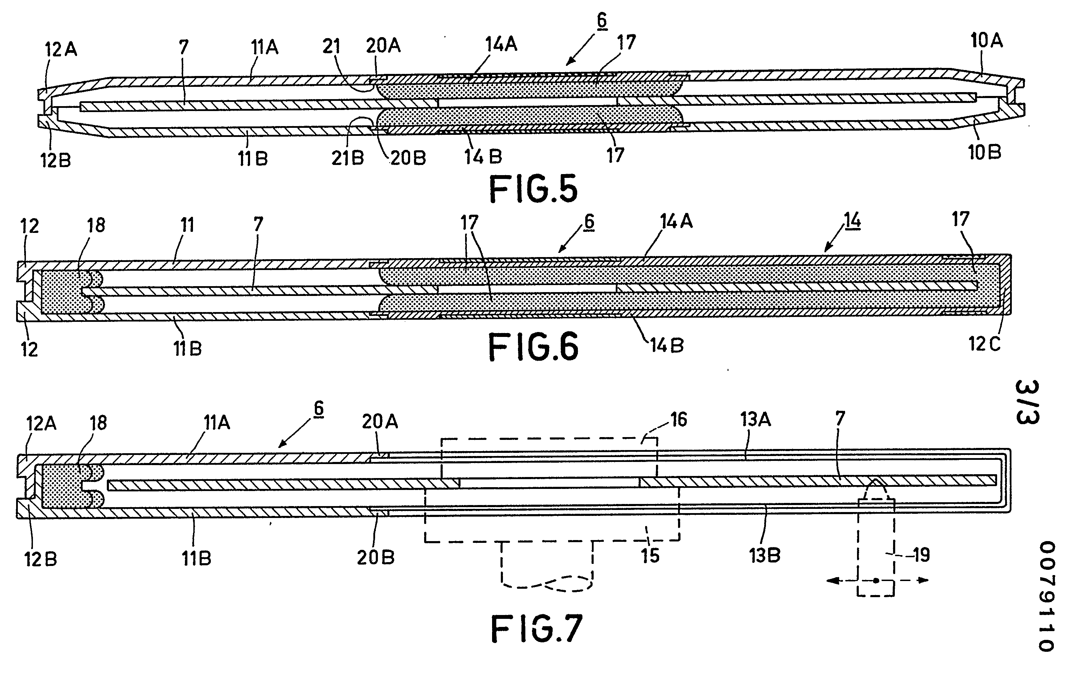

The information-disc cassette 6 comprises, inter alia, the rotatable optical disc 7 for carrying information. The disc is housed in an enclosure 10 comprising two halves 10a and 10b which are attached to each other, each half comprising a major wall 11a and 11b respectively and a half 12A and 12B respectively of the peripheral wall of the enclosure. An opening 13A is formed in the major wall 11A and opening 13B is formed in the major wall 11B. These openings, which can be closed by portions 14A and 14B respectively of a closure member, serve for the passage of means 19, belonging to the drive apparatus 1, for recording and/or reproducing information on the disc 7 (see Figure 7).

The closure member portions 14A and 14B form part of a single closure member 14 for the simultaneous closure of the two openings 13a and 13b in the two major walls. When the closure member has been fitted, the portions 14A and 14B form parts of the two major walls 11A and 11B; thus are interconnected by a portion 12C which forms a part of the peripheral wall which is disposed between said parts of the major walls. The complete closure member can be removed from the enclosure in a radial direction with respect to the disc 7. As shown in Figure 1, the closure member 14 is removed from the enclosure before the information-disc cassette is inserted into the cover 4. When the information-disc cassette 6 has been inserted in the drive apparatus 1 the closure member 14 is kept at hand to be refitted upon removal of the information-disc cassette from the drive apparatus 1.

The portions 14A and 14B respectively of the closure member 14 which form parts of the major walls 11A and 11B extend in the radial direction beyond the centre of the disc 7, in such a way that when the closure member has been fitted the enclosure 10 has a fully closed external shape. When the closure member has been removed the openings 13A and 13B in the major walls provide access to the centre of the disc for the passage of drive members 15 and 16 (see Figure 7) of the drive apparatus 1.

On the inner sides of its major wall portions 14A and 14B the closure member is provided with elastically compressible supporting means in the form of a pad 17 of an expanded plastics or foam rubber. This pad has a thickness such that the disc 7, when the closure member has been fitted, is clamped in place by the elastically compressible pad. Opposite the portion 12C of the closure member 14 a foam-rubber or expanded plastics pad 18 is arranged inside the enclosure. When the information-disc cassette is closed the disc 7 inside the enclosure 10 is clamped in place by the pad 17 and the pad 18 in such a way that substantially no relative movements between the disc and the enclosure are possible. Such steps are generally desirable because the discs of information-disc cassettes of the present type must be driven inside the enclosure, so that a certain clearance within the enclosure is necessary. In the absence of suitable immobilizing means the disc, upon removal of the information-disc cassette from the drive apparatus, might be able to move inside the enclosure, which could lead to the disc being damaged. To be able to rotate inside the enclosure the disc would need to have some axial and radial clearance inside the enclosure. The axial clearance is eliminated by the portions of the elastic pad 17 which are attached to the portions 14A and 14B of the closure member 14. The radial clearance is eliminated by that portion of the pad 17 which is located on the portion 12C of the closure member and which resiliently urges the disc in a radial direction against the elastic pad 18.

Figure 7 represents the situation during operation. The disc has been moved slightly to the right in a radial direction, so that it is no longer in contact with the pad 18. Figure 7 also shows the position of an optical pick-up 19 which co-operates with the disc 7 through the opening 13B in the major wall 11B.

For a satisfactory co-operation of the closure member 14 with the enclosure 10 the closure member and the adjacent parts of the two major walls 11A and 11B are provided with co-operating guide elements in the form of shoulders 20A and 20B and 21A and 21B respectively, which are capable of sliding movements relative to each other only in a radial direction with respect to the disc 7.

Within the scope of the invention embodiments other than those shown are possible. The closure member, instead of being provided with the pad 17, may, for example, carry other elastically compressible supporting means such as plastic leaf springs. In the case of discs provided with a hub, which is the case with most magnetic discs, there is no risk of contact between the disc surface and the enclosure. In the case of a disc cassette containing a magnetic disc it is also advisable that the closure member should not be provided with supporting means which contact the disc surface.

## CLAIMS

1.     An information-disc cassette comprising a rotatable disc for carrying information and an enclosure comprising major walls on opposite sides of the disc and a surrounding peripheral wall, each of the major walls being formed with an opening for the passage of means for recording and/or reproducing the information on the disc, which opening can be closed by means of a closure member, characterized in that:

- a single closure member is provided for simultaneously closing the two openings in the major walls, and
- the closure member is removable from the enclosure in a radial direction with respect to the disc and comprises a removable portion of each of the major walls and a removable portion of the peripheral wall, the latter portion being disposed between said portions of the major walls.

2.     An information-disc cassette as claimed in Claim 1, characterized in that:

- the major wall portions of the closure member extend in a radial direction beyond the centre of the disc,
- the enclosure has a fully closed external shape when the closure member is in place, and
- after the closure member has been removed, said openings in the major walls which provide access to expose the centre of the disc for the passage of drive members of a drive apparatus for rotating the disc.

3.     An information-disc cassette as claimed in Claim 1, characterized in that:

- the closure member is provided on the inner sides of its major wall portions with elastically compressible supporting means such that when the closure member has been fitted, the disc is clamped between the elastically compressible supporting means.

**0079110**
12-08-82

4.         An information-disc cassette as claimed in Claim 1, characterized in that the closure member and the adjacent parts of the two major walls are provided with guide elements which co-operate with each other and which are capable of only rectilinear sliding movements relative to each other.

0079110

# FIG. 1

IV

VI

6

12C

10A

11A

V

14A

V

III

VI

## FIG. 2

12C

10A          10B

6

12A          12B

11A          11B

## FIG.3

6

11A          12C          10B          12A

11B          10A          12B

## FIG.4

FIG.5

FIG.6

FIG.7

3-Ⅲ-PHN 10185

0079110

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| O | ---<br>IEEE TRANSACTIONS ON MAGNETICS, vol. MAG-17, no. 6, November 1981, pages 2742-2744, New York (USA);<br>Y.KATOH et al.: "Development of a new compact floppy disk drive system". *Figure 2 - Proceedings of the 1981 International Magnetics Conference Grenoble, 12th-15th May 1981* | 1,4 | G 11 B  23/02 |
| P,X | ---<br>GB-A-2 081 959  (SONY CORP.)<br>*Page 4, lines 53-102; figure 3* | 1,4 | |
| A | ---<br>IBM TECHNICAL DISCLOSURE BULLETIN, vol. 13, no. 9, February 1971, pages 2552,2553, New York (USA);<br>R.G.CROSS:  "Latch mechanism". *Page 2553, lines 6-13; figures A,B* | 1,2 | TECHNICAL FIELDS SEARCHED (Int. Cl. 3)<br><br>G 11 B |
| A | ---<br>DE-A-2 357 812  (TREND-INSTITUT ANSTALT)<br>*Page 4, lines 20-24; figure 4* | 2 | |
| A | ---<br>AU-A- 514 459  (KAVANAGH)<br>*Page 6, lines 8-12; figure 7* | 1,2,4 | |
| A | ---<br>FR-A-2 226 723  (IBM CORP.)<br>*Page 2, line 13 to page 3, line 16; figures 1-3* | 2 | |
| | ------ | | |

The present search report has been drawn up for all claims

| Place of search<br>THE HAGUE | Date of completion of the search<br>28-01-1983 | Examiner<br>SANDRI S.E. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82